# EUROPEAN PATENT SPECIFICATION

(11) **EP 4 127 705 B1**
(45) Date of publication and mention of the grant of the patent: **16.07.2025**
(21) Application number: 21717487.9
(22) Date of filing: 29.03.2021
(51) Int. Cl.: G01N 30/54

(54) **APPARATUS FOR ANALYZING LABORATORY SAMPLES, A CARTRIDGE FOR LIQUID CHROMATOGRAPHY AND A METHOD FOR HEATING A SAMPLE**
VORRICHTUNG ZUR ANALYSE VON LABORPROBEN, KARTUSCHE FÜR FLÜSSIGKEITSCHROMATOGRAFIE UND VERFAHREN ZUM ERWÄRMEN EINER PROBE
APPAREIL D'ANALYSE D'ÉCHANTILLONS DE LABORATOIRE, CARTOUCHE DE CHROMATOGRAPHIE LIQUIDE ET PROCÉDÉ DE CHAUFFAGE D'UN ÉCHANTILLON

(30) Priority: 27.03.2020 US 202063000562 P
(43) Date of publication of application: 08.02.2023
(73) Proprietor: Thermo Fisher Scientific Oy, 01620 Vantaa (FI)
(72) Inventor: MUSTAJÄRVI, Raimo, 01620 Vantaa (FI); RINTA, Heikki, 01620 Vantaa (FI); NUOTIO, Vesa, 01620 Vantaa (FI); ELO, Arto, 01620 Vantaa (FI); PELTONEN, Matti, 01620 Vantaa (FI); MYYRYLÄINEN, Olli, 01620 Vantaa (FI)
(74) Representative: Laine IP Oy
(86) International application number: PCT/FI2021/050222
(87) International publication number: WO 2021/191508

(56) References cited:
- WO-A2-2019/224702
- IT-A1- VE20 120 031
- US-A- 5 298 225
- US-A1- 2008 085 507
- US-A1- 2016 363 564

## Description

### FIELD

The invention relates to preparing and analysing laboratory samples in an analyser utilizing replaceable liquid chromatography cartridges. More specifically, the invention relates to heating a liquid chromatography column and a sample therein.

### BACKGROUND

Liquid chromatography (LC) is a well-known in the field of chemical separation, compound purification and chemical analysis. A central component of a liquid chromatography system is a chromatographic column. The column comprises a tube, for example a capillary tube that is packed with a permeable solid material that either is, itself, a chromatographic stationary phase or otherwise comprises or supports a chromatographic stationary phase. A fluid mixture comprising both a compound of interest for purification or separation as a chromatographic mobile phase, is caused to flow through the column under pressure from an input to an output end.

One or more liquid chromatography columns may be arranged in a replaceable cartridge that can be changed when its operating life comes to an end or when the type of the column needs to be changed. One type of such a system is described in US2017/0023536. Another document disclosing a chromatography cartridge is US Ser. No.13882116. IT VE20 120 031 discloses an analyser with a heater and a cartridge. A Liquid Chromatography Analyser with heating block and thermal interface thermally connected to a liquid chromatography column is disclosed in US2016/363564.

Further documents relating to liquid chromatography and related systems and analysers are disclosed in documents listed in Citations List at the end of the specification.

### SUMMARY OF THE INVENTION

The invention is defined by the features of the independent claims. Some specific embodiments are defined in the dependent claims.

According to the present invention, there is provided an analyser comprising an interface for receiving a cartridge comprising one or more liquid chromatography column(s) and connecting it to the analyser for performing an analysing task, a heater for heating the chromatography column, the cartridge comprising a cartridge casing for containment of the liquid chromatography column, a heating block thermally connected to the liquid chromatography column and a thermal interface for thermally connecting the heating block to the heater.

According to the present invention, there is provided a liquid chromatography cartridge comprising a cartridge casing for containment of the liquid chromatography column, a heating block thermally connected to the liquid chromatography column and a thermal interface for thermally connecting the heating block to a heater.

According to a further aspect of the present invention, there is provided an analyser wherein the heater comprises a thermistor for measuring temperature, the thermistor being thermally connectable to the thermal interface of the cartridge.

According to a further aspect of the present invention, there is provided an analyser wherein the heater comprises heat transfer parts that are movably mounted to the heater in order to provide alignment with the thermal interface of the cartridge.

According to a further aspect of the present invention, there is provided an analyser wherein the heater comprises pressing elements for pressing the heat transfer parts against the thermal interface.

According to a further aspect of the present invention, there is provided an analyser wherein the heater comprises a thermistor for measuring temperature and resistor to develop heat, the thermistor and resistor being thermally connectable to the thermal interface of the cartridge.

### BRIEF DESCRIPTION OF THE DRAWINGS

FIGURE 1 illustrates an analyser in accordance with at least some embodiments of the present invention;
FIGURE 2 illustrates the analyser of FIGURE 1 in another view;
FIGURE 3 is a closeup of the apparatus of FIGURES 1 and 2;
FIGURE 4 illustrates an example apparatus capable of supporting at least some embodiments of the present invention;
FIGURE 5 is a cross section from FIGURE 1 illustrating an example apparatus capable of supporting at least some embodiments of the present invention;
FIGURE 6 illustrates the analyser of FIGURE 5 showing a heater in opened position;
FIGURE 7 illustrates the heater section of the analyser of FIGURE 5 showing a heater in opened position and as a partial cross section;
FIGURE 8 illustrates some parts of the heater section of the analyser of FIGURES 5, 6 and 7.

### DEFINITIONS

In the present context, the term "Liquid Chromatography" means a process of selective retention of one or more components of a fluid solution as the fluid uniformly percolates through a column of a finely divided substance, or through capillary passageways.

Some LC methods are very temperature sensitive. As an example, how temperature sensitivity is currently addressed, a pre-heater sleeve is used to heat the liquid before exposure to the analytical column. Temperature of the liquid inside column is too sensitive to environment temperature and environment air current has to be controlled to be sufficiently stabilized. More stable and controllable heating and temperature control may be achieved by heating the analytical column via a thermal connection to a heating block. An exemplary heating block has a thermal interface to a heater component included in the analyser instrument. The column and the heating block are contained in a casing of a cartridge. The cartridge is replaceable and can be installed and removed from the analyser. A heater is included in the analyser and the heater can be thermally connected to the cartridge and disconnected therefrom.

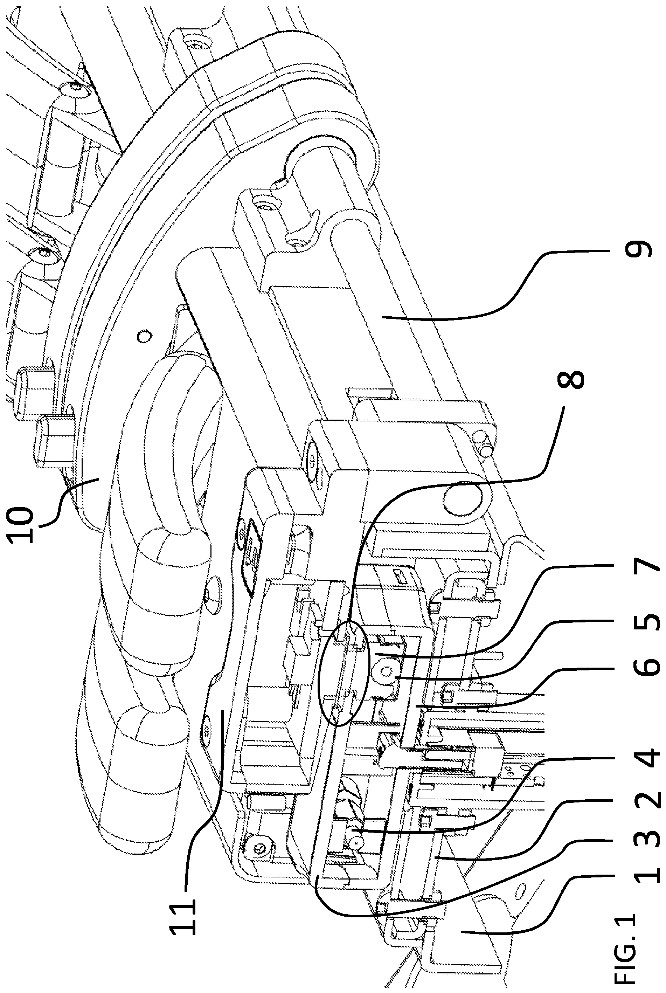

FIGURE 1 illustrates some parts of an analyser capable of supporting at least some embodiments of the present invention. The analyser includes equipment for handling and treating analytes, reagents, and samples, performing analysis and other elements needed for its operation. A general explanatory operation disclosure of such an analyser is below. In particular FIGURE 1 illustrates an analyser comprising an interface for receiving a cartridge comprising one or more liquid chromatography column(s).

The analyser comprises a frame 1, including an interface 2 for receiving a cartridge 3. The interface may comprise electrical, data and fluid connections as well as mechanical connectors for coupling the cartridge detachably to the analyser. The cartridge comprises a casing 6. The casing 6 contains a first column 4 for liquid chromatography and a second column 5 for liquid chromatography. The second column 5 is partially enclosed within a heating block 7. The heating block 7 is made of a material having good thermal conducting capability and it is in contact with the surface of the second column in order to ensure good heat transfer and good thermal conducting capacity between contacting surfaces. The heating block 7 has a surface that extends out of the casing 6. This surface forms a thermal interface 8 for connecting the cartridge to a heater of the analyser.

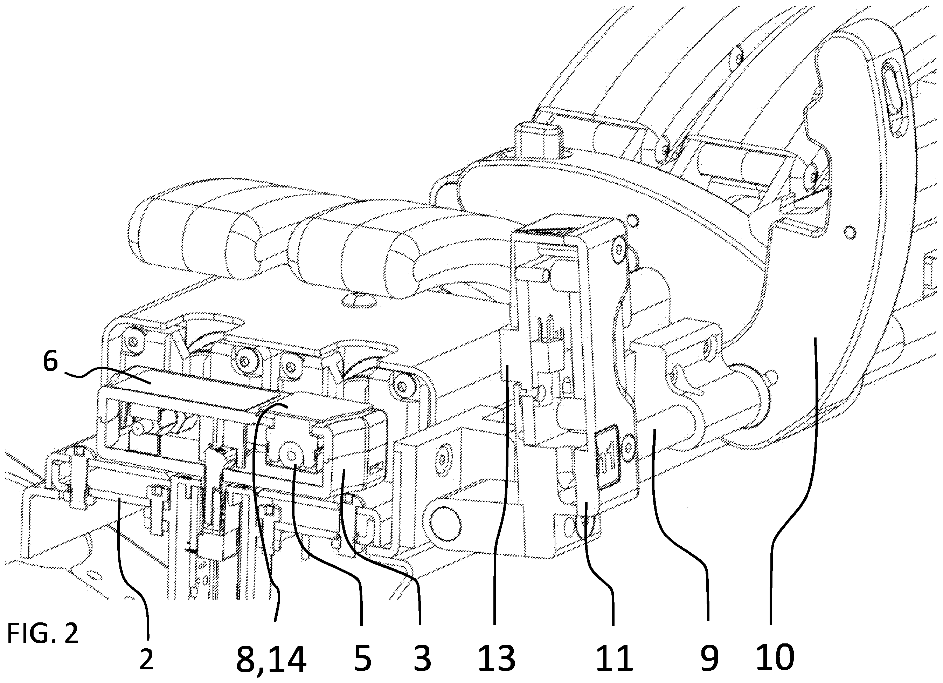

FIGURE 2 illustrates the heater in an opened position. Now the thermal interface 8 exposed from the casing 6 of the cartridge 3 can be seen and the heater 11 with a surface that extends out for connecting to the thermal interface 8 is visible on the upturned heater 11. The thermal interface 8 is covered with thermal tape 14.

The heater 11 is rotatable mounted on an axle 9. The heater 11 can be operated by a handle 10 by rotating it on the axle so that the heater 11 is lifted from the cartridge for removal of the cartridge and pressed on it to connect the heater 11 to the cartridge 3. Another heater version may comprise a handle merged with electronic component casing and the rotation of the heater may be accomplished by it.

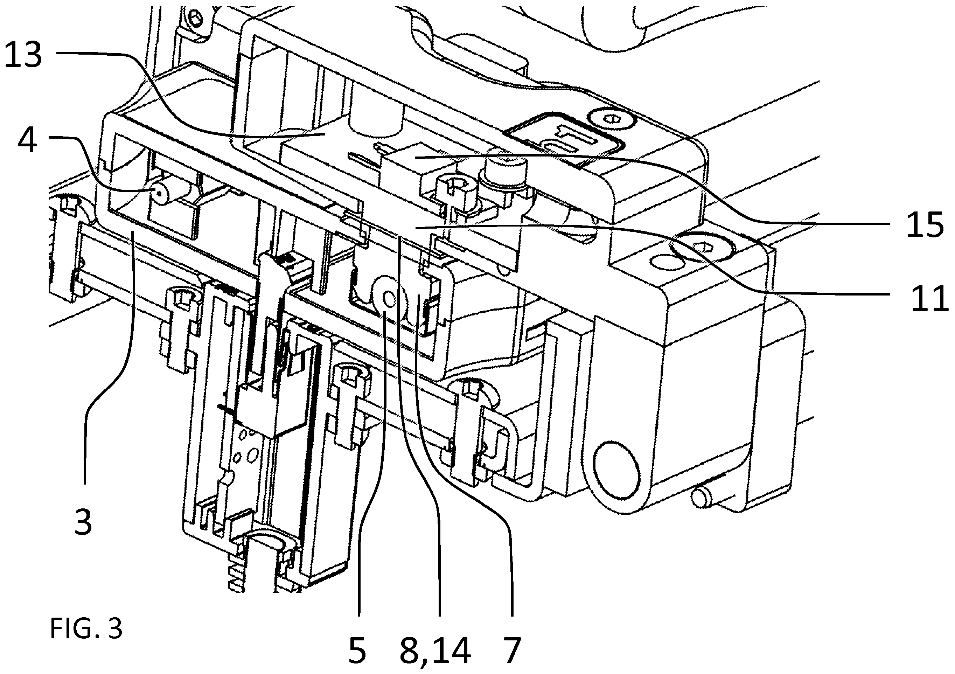

Heat transfer interfaces between elements of the apparatus from the resistor 15 to the second column 5 are depicted in FIGURE 3. First interface is between the resistor 15 and the heat transfer part 13 of the heater 11. The resistor 15 is used for heating the heat transfer part 13 of the heater 11 and may be permanently and securely mounted on the heat transfer part in order to guarantee good heat transfer. In the apparatus of FIGURE 3 the resistor 15 is mounted on the heat transfer part 13 by a screw to enable changing of the resistor 15. Second heat transfer interface is formed between the heat transfer part 13 and the thermal tape 14 and third between the heating block 7 and the thermal tape 14. In these interfaces, the thermal tape 14 is used for securing good heat transfer. A fourth interface is between the heating block 7 and the second column 5. All other interfaces are configured to be fixed when the apparatus is operational and are dismantled only when repairs or maintenance is needed. One of the interfaces between the heater 11 (heating block), thermal tape 14 and the heating block 7 is configured to be openable in order to enable changing of the cartridge 3.

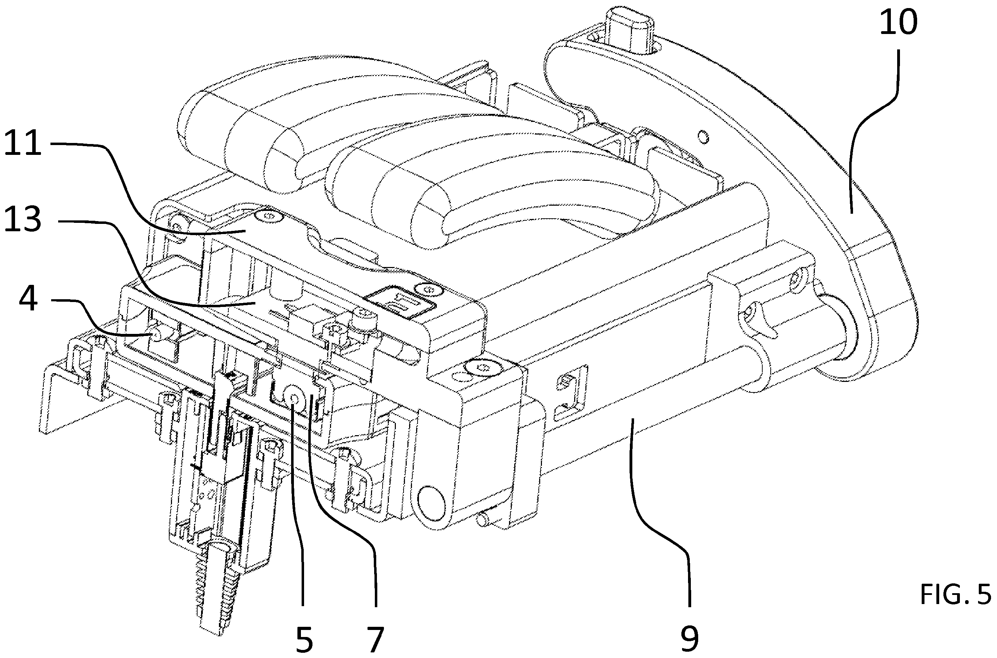

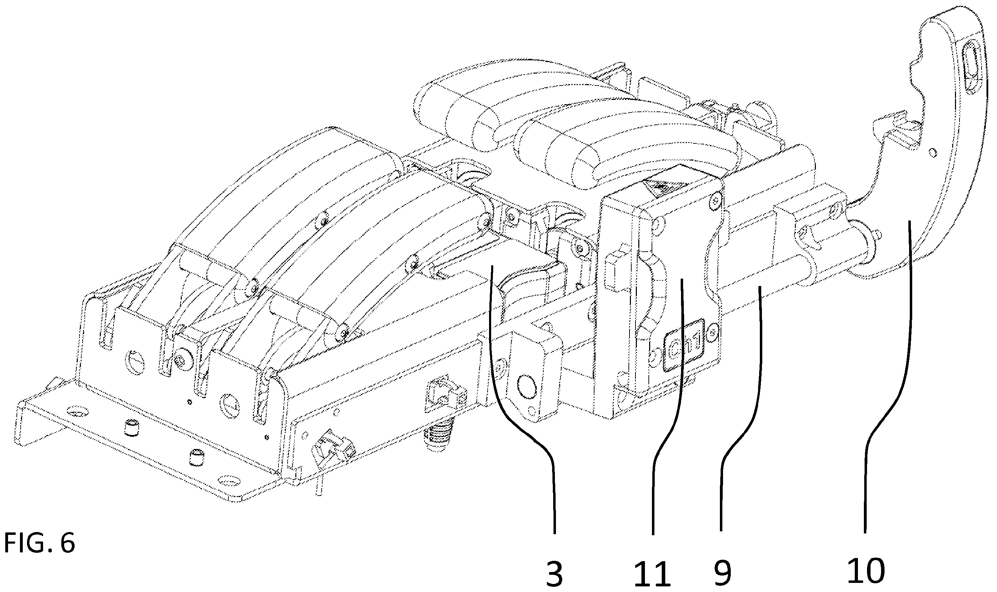

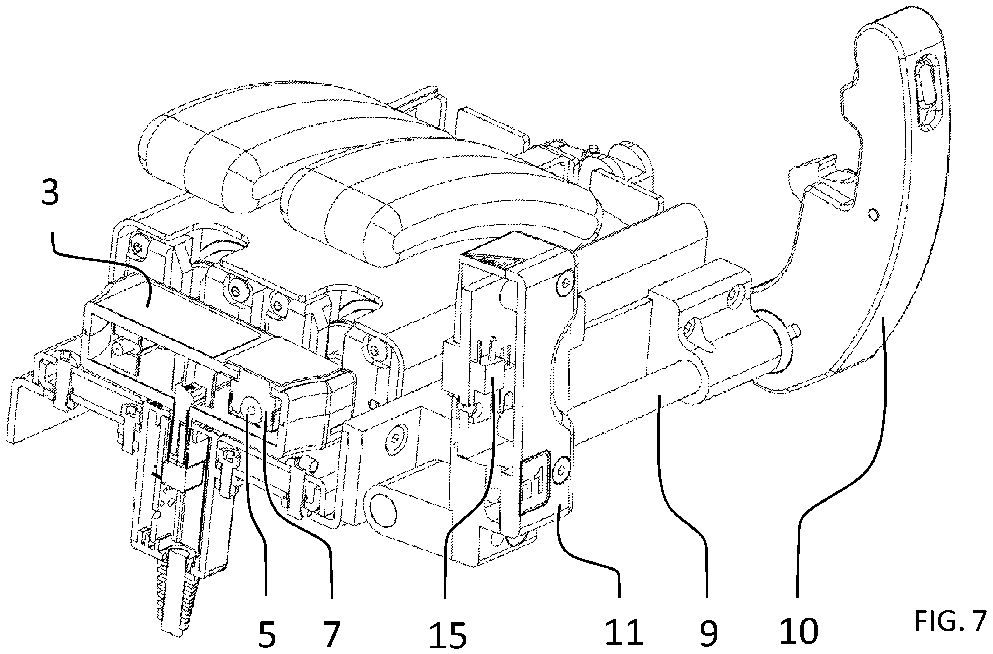

FIGURES 6 and 7 show the heater 11 in an opened position. Now the cartridge can be easily changed. One can also see from FIGURES 5 and 6 that the transfer of the heater by rotation places the heater 11 accurately and reliably over the cartridge 3.

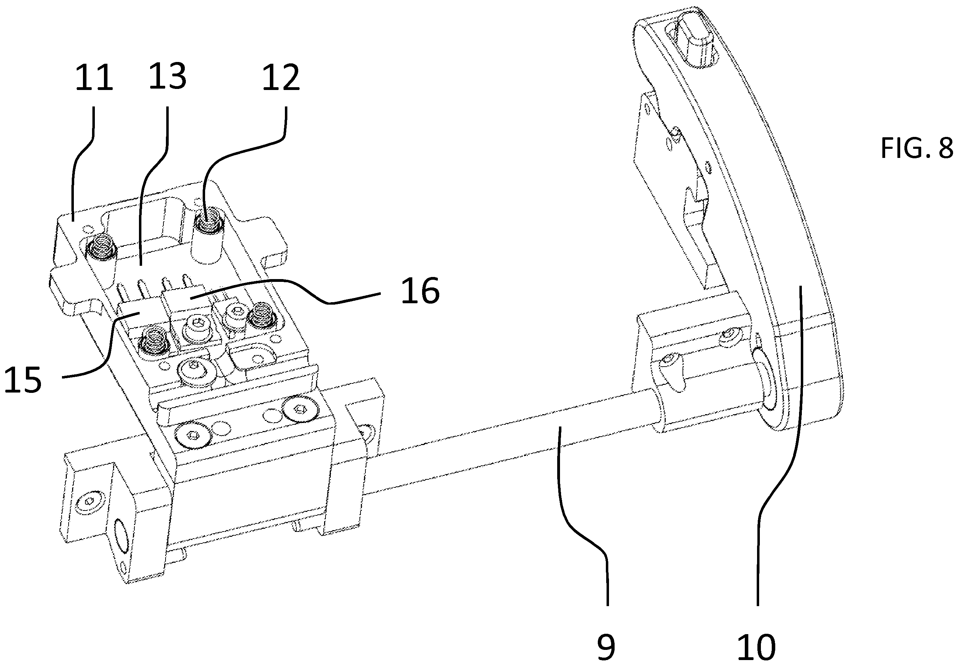

FIGURE 8 shows the heater 11 without a lid or cover. In this FIGURE one can see springs 12 for pressing the heat transfer part 13 on the thermal interface 8. Resistor 15 and thermistor 16 are also visible on the heat transfer part 13. There is also "thermal tape" 14 between heating block and the heat transfer part. It makes heater element connection (or heat transfer interface) more robust against dirt, foreign obstacles (small bit of for example paper causes big loss of heat transfer capability), heater element level errors, and also prevents metal-to-metal detrition.

The thermistor 16 is for measuring temperature and is thermally connected to the thermal interface of the cartridge. Further, the heater 11 of FIGURE 8 comprises heat transfer parts that are movably mounted to the heater 11 in order to provide alignment with the thermal interface of the cartridge. The heater 11 comprises also pressing elements for pressing the heat transfer parts against the thermal interface. A resistor 15 is provided to develop heat, the thermistor and resistor being thermally connectable to the thermal interface of the cartridge.

The cartridge may comprise a Quick Connect Cartridge H (Thermo Fisher Scientific), for example. The temperature of the second column of the cartridge (or the first, if desired) is changed and controlled with a heater called a Column Heater. The Column Heater and Quick Connect Cartridge H has parts that can transfer heat to liquid chromatography column effectively and they are thermally connected. Exact connection of these heat transfer parts is vital for correct temperature measuring and heat transferring.
- Column Heater has resistor that heats Cartridge's column via heat transfer part
- Column Heater has thermistor that measures temperature and it is connected to heat transfer part
- Heat transfer part has certain freedom of movement to ensure correct positioning when heat transfer parts are locked together
- Heat transfer part has springs 12 to ensure certain force between heat transfer parts

User can easily remove Column Heater away from the Quick Connect Cartridge H for user to change cartridge. The position of the Column Heater is measured with a sensor. Thermal tape between moving heat transfer parts lessens risk of inadequate heat transfer connection.

The heater 11 is not inside cartridge housing, but a part of the analyser. The problem with cartridges is that cartridges are consumables which may be changed even up to once per week and thus will cost more than external heater, recycling of a cartridge including a heater is more difficult and also controlling the quality of large quantity assembling is harder. In the cartridge according to at least some embodiments of the invention only most simple mechanical parts are placed inside the cartridge and electronic components and moving mechanical parts on an external heater. Elements and members of the heater can be easily (user friendly) removed and re-attached to column via cartridge for secure (counter design features against user errors) and precise (counter design features against mechanism wearing and breakage) heat transfer. At least some of the embodiments of the invention answer to the problem how to mechanically make an external removable heater which is able to make good enough contact via heat transferring parts.

In the column heater mechanism described above, the columns are positioned in a cartridge casing (described in US20170023536A1 and its parent application US Ser. No 13/882,116, filed as an application No PCT/US11/58229) and heat is transferred onto the column surface and temperature is measured from the column surface via heat transferring parts in contact, and not via air. These mechanical parts come in contact either when cartridge is inserted (Clamp Heater -concept) or when column heater casing (containing heat transfer parts, temperature measurement sensor, heat producing component) is moved to its locking position. Main movement direction is not sliding or sideways, but rotational or straight to directly align the two opposing flat surfaces flush with each other. Also, there are either elements of;
- moving heater casing (containing heating and sensoring components) into contact towards the stationary column parts, or
- column parts make contact with stationary heating and sensoring components during cartridge installation by user.
- There is possibility to use a locking handle to ensure cartridge position or heating/sensoring parts position.

Some known solutions have a problem that heat is transferred to the column and also temperature is measured via air. This makes temperature transferring slow and measuring easily dependent on environmental effects (for as outside temperature and air drift) and thus inaccurate. It is critical to make a good mechanical contact between heat transferring and thus make a fast heat transfer, and fast and accurate temperature measurement. These issues can be addressed by at least some embodiments of the invention.

Also, in some known solutions there is a risk of cross-contamination because column compartments are not described to be cleaned between column changing and during rotary movement, and contamination if column ends are not sealed individually with their own sealing parts when columns are not in use. Above disclosed cartridges (with column inside) are easily changed and they have their own sealing caps when not in use.

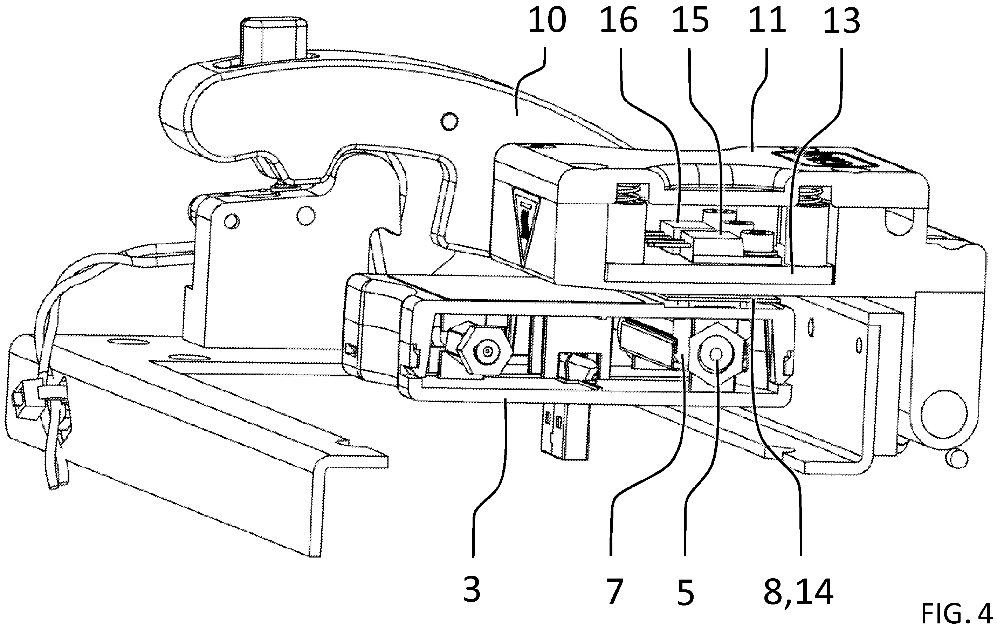

FIGURE 4 illustrates an example of an apparatus capable of supporting at least some embodiments of the present invention.

The heat transfer part 13 of the heater 11 is spring loaded at four corners for equal levelling and thermal contact pressure against heater block in the cartridge 3. This functionality is for robustness against manufacturing tolerances and possible detrition from usage. Thermal tape 14 between heat transfer part 13 of the heater 11 and the heating block 7 increases robustness for thermal contact. This functionality is for manufacturing tolerances and possible small particles between heater elements.

The column temperature can be precisely controlled (even ± 2°C). The heater element is placed outside the Quick Connect Cartridge but it is tightly connected to the heater block that surrounds the column itself. This enables the easy chancing of the Quick Connect Cartridge while allowing the heater to control needed temperature at the column required by the assays.

Movement of the Heater Block can be done in multiple ways or mechanisms. The described examples provide correct functionality (heat transfer and temperature measurement). It is important to connect column to heater block, heater block to heat transfer part, and heat transfer part to thermistor tightly and also with same amount of cross section for heat transfer always when the connection is made, but it is also relevant to measure the temperature precisely near the column and similarly every time the cartridge is connected for controlling the heat provided.

In the following, some features of sample treatments and analysing methods related to liquid chromatography are described.

The analyser can offer fully automated random access work flow for analysis of clinical patient samples. WO 2012058632 discloses an automated system for sample preparation and analysis that is especially suitable to be used in connection with at least some embodiments of the invention. The system incorporates the following features online: sample preparation, TurboFlow technology and high performance liquid chromatography (HPLC) technology, Multiplexing technology, and tandem mass spectrometry detection in selected reaction monitoring (SRM) mode. Multiplexing technology is a configuration combining two LC channels that can be run simultaneously to a single mass spectrometer, maximizing the sample throughput. SRM is a highly selective technique used to detect specific analytes using tandem mass spectrometry.

Patient samples are introduced to the analyser by placing sample tubes or cups in a sample rack and inserting the sample rack into the analyser. Similarly, reagents are introduced to the analyser by placing them into a reagent rack and inserting the reagent rack into the analyser. Samples and reagents in the racks are automatically identified from their barcodes. If barcodes are not used, the samples can be identified manually using the analyser software. Samples are defined either via LIS or locally using the analyser software. The analyser accepts most common types of sample tubes and barcodes. The sample material can be for example whole blood, plasma or serum.

Biological samples contain various endogenous matrix compounds such as proteins and lipids. These low-volatility compounds may interfere the subtle ion formation process in the ion source of the mass spectrometer i.e., cause ion suppression or enhancement. Therefore a proper pretreatment is required before a sample of biological origin can be introduced into a LC/MS system. During sample preparation process the amount of interfering compounds originating from the sample matrix is drastically decreased which in turn increases instrument performance by enhancing detection sensitivity and reducing potential LC column blocking and MS contamination.

While much of the proteins present in a given matrix can be precipitated out of the solution during sample preparation, there are still many components remaining in the solution that can cause interference during analysis. These are removed using TurboFlow technology, which is an online clean-up technique used to separate the analytes from the interfering compounds. With TurboFlow technology, rapid and efficient separations of complex sample matrices and analytes are achieved.

In TurboFlow technology, the sample is introduced to the TurboFlow column in a high-velocity solvent flow. The column is packed with large column particles that interact with small molecules while large molecules such as proteins flow through the column to waste. Separation of molecules is based on varied diffusion properties between large and small molecules and the chemical binding affinity of the diffused small molecules to the column particles.

High performance liquid chromatography, (HPLC) is a chemical and physical separation which is used to separate a mixture in solution into its individual components. The analyser utilizes partition chromatography, in which the separation is based on the samples' components partitioning between the mobile and stationary phases. The mobile phase is comprised of the solvents in varying ratios, and the stationary phase is the solid packing material of the analytical column inside the quick connect cartridge.

Components whose distribution ratio favours the stationary phase have more or stronger interaction with the active groups of the column packing material, and therefore require a longer time to pass through the LC channel. To elute the analytes and other compounds bound to the stationary phase, the solvent composition of the mobile phase must be changed so that the change in polarity causes the analyte to part from the stationary phase to the mobile phase. The time it takes for the analyte to travel through the analytical column is called retention time. The retention time varies depending on the analyte, strength of the interactions with the stationary phase, the composition of solvents used, temperature, and the flow rate of the mobile phase.

The analyte is first extracted from the sample matrix in an automated sample preparation process. The injected sample extract (supernatant) is then purified with TurboFlow technology and the analyte is chromatographically separated from interfering compounds with HPLC. The selected analyte is then detected and measured at the mass spectrometer. The result is quantified and a concentration value of the analyte is shown to the user.

The user inserts the sample rack with the homogenous and thoroughly mixed sample and the reagent rack with needed reagents into the analyser. Whole blood samples in tubes are mixed on board automatically with mixing tips prior to dispensing. An extraction vessel is brought to a vessel disk and opened for dispensing. Reagents including an internal standard and sample are dispensed using assay specific parameters.

The internal standard solution in organic solvent initiates protein precipitation. With whole blood samples the reagent causes the red blood cells in the sample to burst and release the analyte, followed by protein precipitation. The contents of the extraction vessel are mixed in a shaker. Shaking enhances protein precipitation and whole blood lysis. Sample and reagent(s) are mixed to form a homogenous mixture/solution. The supernatant is injected into the injection loop. Bringing the injector loop on-line mixes the sample with LC solvent flow. The sample flow enters the TurboFlow column. Small molecules such as the analytes and internal standards are separated from large molecules such as proteins. Large (interfering) molecules are rinsed to waste, and afterwards analytes and internal standards are flushed back from the TurboFlow column to the analytical column. Analytes and internal standards are focused into a sharp band when entering the analytical column. Analyte and internal standard are separated from other compounds in the sample according to their polarity and affinity to the stationary phase. Increasing the incoming proportion of organic solvent causes the analyte and internal standard to be released and eluted from the analytical column to the mass spectrometer.

One example of changing the cartridge is the following:

The cartridge 3 can be accessed by opening the LC door. The cartridge 3 can be released by opening the handles 10 on the quick connect clamp to release the quick connect cartridge. The column heater 11 can be opened by pressing a locking button in the handle 10 and pulling the handle. A dialog box opens showing that the quick connect clamp has been opened. The old quick connect cartridge 3 can be pulled out from the clamp. The used cartridge 3 can be disposed of or stored for later use. A new cartridge 3 can now be inserted in the clamp by guiding the USB connector on the cartridge 3 into the USB port on the clamp and pressing the cartridge 3 into place. The column heater handle 10 is closed by pressing the handle 10 towards the analyser until a clicking sound is heard. The handles on the quick connect clamp and the door are closed.

### INDUSTRIAL APPLICABILITY

The invention may be utilized in chemical analyzers and manufacture of the analyzers.

### ACRONYMS LIST

- HPLC: High Performance Liquid Chromatography
- LC: Liquid Chromatography

### REFERENCE SIGNS LIST

- 1: frame
- 2: interface of receiving a cartridge
- 3: cartridge
- 4: first column
- 5: second column
- 6: casing
- 7: heating block
- 8: thermal interface
- 9: axle
- 10: handle
- 11: heater
- 12: springs
- 13: heat transfer part
- 14: thermal tape
- 15: resistor
- 16: thermistor

### CITATION LIST

### Patent Literature

US2017/0023536, US 13882116, US15284411, US2008017925A1, US 2009/0014373 A1, WO 2012058632

## Claims

1. An analyser comprising:
a frame (1) having an interface (2) for receiving a replaceable cartridge (3) and for fluidically connecting the replaceable cartridge (3) to an analyser for performing an analysing task, wherein the replaceable cartridge (3) comprises:
a liquid chromatography column (4, 5);
a cartridge casing (6) for containment of the liquid chromatography column (4, 5);
a heating block (7) thermally connected to the liquid chromatography column (4, 5); and
a thermal interface (8) for thermally connecting the heating block to a heater;
a heater (11) included in the analyser for heating the liquid chromatography column (4, 5) of the replaceable cartridge (3),
wherein the heater (11) is moveable between an open position for installing the cartridge (3) onto the interface (2) or removing the cartridge from the interface and a locking position for heating the liquid chromatography column (4, 5).

2. An analyser according to the claim 1, wherein the heater (11) comprises a thermistor (15) for measuring temperature, the thermistor (15) being thermally connectable to the thermal interface (8) of the cartridge (3).

3. An analyser according to one of the claims 1 - 2, wherein the heater comprises heat transfer parts (13) that are movably mounted to the heater (11) in order to provide alignment with the thermal interface (8) of the cartridge (3) after installation of the cartridge.

4. An analyser according to one of the claims 1 - 3 wherein the heater (11) comprises pressing elements (12) for pressing the heat transfer parts (13) against the thermal interface (8).

5. An analyser according to one of the claims 1 - 4 wherein the heating block (7) has a surface that extends out of the casing (6).

6. A liquid chromatography cartridge (3) comprising a cartridge casing (6) for containment of a liquid chromatography column (4, 5), a heating block (7) thermally connected to the liquid chromatography column (4, 5) and a thermal interface (8) for thermally connecting the heating block to a heater (11) of an analyzer, the heater (11) being moveable between an open position for installing the cartridge (3) onto an interface (2) of the analyser and a locking position for heating the liquid chromatography column (4, 5) of cartridge (3) installed in the interface (2).

7. A liquid chromatography cartridge (3) according to the claim 6, wherein the thermal interface (8) is covered with a thermal tape (14).

8. A liquid chromatography cartridge (3) according to one of the claims 6 - 7, wherein the heating block (7) at least partially envelops the liquid chromatography column (4, 5) and is set against its surface.

9. A liquid chromatography cartridge according to one of the claims 5 - 8, wherein the heating block (7) has a surface that extends out of the casing (6).

10. A method for heating a sample in a liquid chromatography column (4, 5) placed in a casing (6) of a cartridge (3), the method comprising:
providing a heating block (7) inside the cartridge casing (6) and in contact with the surface of the column (4, 5) and having a thermal interface (8);
contacting the heating block (7) with heat transfer elements (13) of a heater (11) of an analyser, the analyser having an interface (2) for receiving the cartridge (3) and being moveable between an open position for installing the cartridge (3) onto the interface (2) and a closed position for heating the liquid chromatography column (4, 5) of the cartridge (3) installed in the interface (2); and
heating the heating block (7) by the heater (11) for conducting the heat energy to the column (4, 5).

11. A method according to the claim 10, further comprising:
measuring the temperature of the heating block (7); and
controlling, by the heater (11), the temperature of the heating block (7) and thereby the temperature of the sample in the column (4, 5).

## Patentansprüche

1. Analysator, umfassend:
einen Rahmen (1) mit einer Schnittstelle (2) zum Aufnehmen einer austauschbaren Kartusche (3) und zum fluidischen Verbinden der austauschbaren Kartusche (3) mit einem Analysator zum Durchführen einer Analyseaufgabe, wobei die austauschbare Kartusche (3) umfasst:
eine Flüssigkeitschromatographiesäule (4, 5);
ein Kartuschengehäuse (6) für das Containment der Flüssigkeitschromatographiesäule (4, 5);
einen Heizblock (7), der thermisch mit der Flüssigkeitschromatographiesäule (4, 5) verbunden ist; und
eine thermische Schnittstelle (8) zum thermischen Verbinden des Heizblocks mit einer Heizung;
eine im Analysator enthaltene Heizung (11) zum Beheizen der Flüssigkeitschromatographiesäule (4, 5) der austauschbaren Kartusche (3),
wobei die Heizung (11) zwischen einer offenen Position zum Installieren der Kartusche (3) auf der Schnittstelle (2) oder zum Entfernen der Kartusche von der Schnittstelle und einer Verriegelungsposition zum Beheizen der Flüssigkeitschromatographiesäule (4, 5) beweglich ist.

2. Analysator nach Anspruch 1, wobei die Heizung (11) einen Thermistor (15) zur Temperaturmessung umfasst, wobei der Thermistor (15) thermisch mit der thermischen Schnittstelle (8) der Kartusche (3) verbunden werden kann.

3. Analysator nach einem der Ansprüche 1 bis 2, wobei die Heizung Wärmeübertragungsteile (13) umfasst, die beweglich an der Heizung (11) montiert sind, um nach Installation der Kartusche eine Ausrichtung mit der thermischen Schnittstelle (8) der Kartusche (3) bereitzustellen.

4. Analysator nach einem der Ansprüche 1 bis 3, wobei die Heizung (11) Druckelemente (12) zum Pressen der Wärmeübertragungsteile (13) gegen die thermische Schnittstelle (8) umfasst.

5. Analysator nach einem der Ansprüche 1 bis 4, wobei der Heizblock (7) eine Oberfläche aufweist, die aus dem Gehäuse (6) herausragt.

6. Flüssigkeitschromatographiekartusche (3), umfassend ein Kartuschengehäuse (6) für das Containment einer Flüssigkeitschromatographiesäule (4, 5), einen Heizblock (7), der thermisch mit der Flüssigkeitschromatographiesäule (4, 5) verbunden ist, und eine thermische Schnittstelle (8) zum thermischen Verbinden des Heizblocks mit einer Heizung (11) eines Analysators, wobei die Heizung (11) zwischen einer offenen Position zum Installieren der Kartusche (3) auf einer Schnittstelle (2) des Analysators und einer Verriegelungsposition zum Beheizen der Flüssigkeitschromatographiesäule (4, 5) der in der Schnittstelle (2) installierten Kartusche (3) beweglich ist.

7. Flüssigkeitschromatographiekartusche (3) nach Anspruch 6, wobei die thermische Schnittstelle (8) mit einem Wärmeband (14) bedeckt ist.

8. Flüssigkeitschromatographiekartusche (3) nach einem der Ansprüche 6 bis 7, wobei der Heizblock (7) die Flüssigkeitschromatographiesäule (4, 5) mindestens teilweise umhüllt und an ihrer Oberfläche anliegt.

9. Flüssigkeitschromatographiekartusche nach einem der Ansprüche 5 bis 8, wobei der Heizblock (7) eine Oberfläche aufweist, die aus dem Gehäuse (6) herausragt.

10. Verfahren zum Erhitzen einer Probe in einer Flüssigkeitschromatographiesäule (4, 5), die in einem Gehäuse (6) einer Kartusche (3) angeordnet ist, wobei das Verfahren umfasst:
Bereitstellen eines Heizblocks (7) im Inneren des Kartuschengehäuses (6), der mit der Oberfläche der Säule (4, 5) in Kontakt steht und eine thermische Schnittstelle (8) aufweist;
Inkontaktbringen des Heizblocks (7) mit Wärmeübertragungselementen (13) einer Heizung (11) eines Analysators, wobei der Analysator eine Schnittstelle (2) zum Aufnehmen der Kartusche (3) aufweist und zwischen einer offenen Position zum Installieren der Kartusche (3) auf der Schnittstelle (2) und einer geschlossenen Position zum Beheizen der Flüssigkeitschromatographiesäule (4, 5) der in der Schnittstelle (2) installierten Kartusche (3) beweglich ist; und
Erhitzen des Heizblocks (7) durch die Heizung (11), um die Wärmeenergie an die Säule (4, 5) zu leiten.

11. Verfahren nach Anspruch 10, ferner umfassend:
Messen der Temperatur des Heizblocks (7); und
Regeln der Temperatur des Heizblocks (7) und damit der Temperatur der Probe in der Säule (4, 5) durch die Heizung (11).

## Revendications

1. Analyseur comprenant :
un cadre (1) ayant une interface (2) pour recevoir une cartouche remplaçable (3) et pour relier fluidiquement la cartouche remplaçable (3) à un analyseur pour effectuer une tâche d'analyse, dans lequel la cartouche remplaçable (3) comprend :
une colonne de chromatographie liquide (4, 5) ;
un boîtier de cartouche (6) pour contenir la colonne de chromatographie liquide (4, 5) ;
un bloc chauffant (7) relié thermiquement à la colonne de chromatographie liquide (4, 5) ; et
une interface thermique (8) pour relier thermiquement le bloc chauffant à un dispositif de chauffage ;
un dispositif de chauffage (11) inclus dans l'analyseur pour chauffer la colonne de chromatographie liquide (4, 5) de la cartouche remplaçable (3),
dans lequel le dispositif de chauffage (11) peut être déplacé entre une position ouverte pour installer la cartouche (3) sur l'interface (2) ou retirer la cartouche de l'interface et une position de verrouillage pour chauffer la colonne de chromatographie liquide (4, 5).

2. Analyseur selon la revendication 1, dans lequel le dispositif de chauffage (11) comprend un thermistor (15) pour mesurer la température, le thermistor (15) étant thermiquement reliable à l'interface thermique (8) de la cartouche (3).

3. Analyseur selon l'une quelconque des revendications 1 à 2, dans lequel le dispositif de chauffage comprend des pièces de transfert de chaleur (13) qui sont montées de manière mobile sur le dispositif de chauffage (11) afin d'assurer l'alignement avec l'interface thermique (8) de la cartouche (3) après l'installation de la cartouche.

4. Analyseur selon l'une quelconque des revendications 1 à 3, dans lequel le dispositif de chauffage (11) comprend des éléments de pression (12) pour presser les pièces de transfert de chaleur (13) contre l'interface thermique (8).

5. Analyseur selon l'une quelconque des revendications 1 à 4, dans lequel le bloc chauffant (7) présente une surface qui s'étend hors du boîtier (6).

6. Cartouche de chromatographie liquide (3) comprenant un boîtier de cartouche (6) pour contenir une colonne de chromatographie liquide (4, 5), un bloc chauffant (7) relié thermiquement à la colonne de chromatographie liquide (4, 5) et une interface thermique (8) pour relier thermiquement le bloc chauffant à un dispositif de chauffage (11) d'un analyseur, le dispositif de chauffage (11) peut être déplacé entre une position ouverte pour installer la cartouche (3) sur une interface (2) de l'analyseur et une position de verrouillage pour chauffer la colonne de chromatographie liquide (4, 5) de la cartouche (3) installée dans l'interface (2).

7. Cartouche de chromatographie liquide (3) selon la revendication 6, dans laquelle l'interface thermique (8) est recouverte d'une bande thermique (14).

8. Cartouche de chromatographie liquide (3) selon l'une quelconque des revendications 6 à 7, dans laquelle le bloc chauffant (7) enveloppe au moins partiellement la colonne de chromatographie liquide (4, 5) et est placé contre sa surface.

9. Cartouche de chromatographie liquide selon l'une quelconque des revendications 5 à 8, dans laquelle le bloc chauffant (7) a une surface qui s'étend hors du boîtier (6).

10. Procédé de chauffage d'un échantillon dans une colonne de chromatographie liquide (4, 5) placée dans un boîtier (6) d'une cartouche (3), le procédé comprenant :
la fourniture d'un bloc chauffant (7) à l'intérieur du boîtier de la cartouche (6), en contact avec la surface de la colonne (4, 5) et doté d'une interface thermique (8) ;
la mise en contact du bloc chauffant (7) avec les éléments de transfert de chaleur (13) d'un dispositif de chauffage (11) d'un analyseur, l'analyseur ayant une interface (2) pour recevoir la cartouche (3) et pouvant être déplacé entre une position ouverte pour installer la cartouche (3) sur l'interface (2) et une position fermée pour chauffer la colonne de chromatographie liquide (4, 5) de la cartouche (3) installée dans l'interface (2) ; et
le chauffage du bloc chauffant (7) à l'aide du dispositif de chauffage (11) afin de conduire l'énergie thermique vers la colonne (4, 5).

11. Procédé selon la revendication 10, comprenant en outre :
la mesure de la température du bloc chauffant (7) ; et
la commande, par le dispositif de chauffage (11), de la température du bloc chauffant (7) et, par conséquent, de la température de l'échantillon dans la colonne (4, 5).
